# EUROPÄISCHE PATENTSCHRIFT

(11) **EP 3 150 311 B1**
(45) Veröffentlichungstag und Bekanntmachung des Hinweises auf die Patenterteilung: **12.06.2019**
(21) Anmeldenummer: 16195654.5
(22) Anmeldetag: 20.12.2012
(51) Int. Cl.: B23B 31/00, B23B 31/02, B23B 31/117, B23B 31/20, B23B 31/30

(54) **WERKZEUGHALTER UND VERFAHREN ZUR HERSTELLUNG EINER WERKZEUGAUFNAHME FÜR EINEN SOLCHEN WERKZEUGHALTER**
TOOL HOLDER AND TENSIONING SYSTEM WITH SUCH A TOOL HOLDER AND METHOD FOR PRODUCING A TOOL HOLDER FOR A SUCH TOOL HOLDER
PORTE-OUTIL ET SYSTÈME DE SERRAGE COMPRENANT UN TEL PORTE-OUTIL ET PROCÉDÉ DE FABRICATION D'UN LOGEMENT D'OUTIL POUR UN TEL PORTE-OUTIL

(30) Priorität: 27.12.2011 DE 202011109498 U; 30.10.2012 DE 102012110392
(43) Veröffentlichungstag der Anmeldung: 05.04.2017
(62) Teilanmeldung aus: 12812634.9
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau

(56) Entgegenhaltungen:
- EP-A1- 2 001 624
- EP-A1- 2 749 367
- EP-A2- 1 029 620
- WO-A1-2007/118626
- DE-A1-102006 028 408
- DE-C- 846 952
- FR-A- 1 272 885
- JP-U- S4 895 278
- Haruki Mizoguchi: "End mill", Japan Platform for Patent Information (J-PlatPat) / National Center for Industrial Property Information and Training (INPIT) Incorporated company MST corporation, Nr. JP1430001S 19. Dezember 2011 (2011-12-19), XP055342205, Japan Gefunden im Internet: URL:https://www4.j-platpat.inpit.go.jp/cgi -bin/tran_web_cgi_ejje?u=http://www4.j-pla tpat.inpit.go.jp/eng/translation/201702040 1265730916812307260686318093DB5E824EC042F9 951C7707A9ED5DE [gefunden am 2017-02-03]

## Beschreibung

Die Erfindung betrifft ein Verfahren zur Herstellung einer Werkzeugaufhahme für einen Werkzeughalter zum reibschlüssigen Spannen von Werkzeugen.

Aus der WO 2007/118626 A1 ist bereits ein Werkzeughalter mit einer innerhalb eines Grundkörpers angeordneten Dehnbuchse bekannt, die zur Aufnahme eines Werkzeugs ausgebildet und zum Spannen des Werkzeugs von außen mit Druckfluid beaufschlagbar ist. Der Werkzeughalter enthält ferner eine Auszugssicherung, die zur Verhinderung eines axialen Auswanderns des Werkzeugs während der Bearbeitung mehrere im Grundkörper angeordnete Sperrelemente zum Eingriff in korrespondierende Gegenelemente am Werkzeug enthält. Die Sperrelemente sind bei dem bekannten Werkzeughalter als Sperrstifte oder Kugeln ausgeführt, die in entsprechenden Bohrungen des Grundköpers verschiebbar geführt sind und in zugehörige Sperrnuten an dem Schaft eines zu spannenden Werkzeugs eingreifen. Bei diesem Werkzeughalter muss der Grundkörper jedoch aufwendig bearbeitet werden, um die Sperrelemente aufnehmen zu können.

Aus der EP 2749367 ist ein Werkzeughalter mit einem Grundkörper, einer verformbaren Aufnahme zum Spannen eines Werkzeugs und zwei einteilig mit der Aufnahme ausgebildeten Sperrelementen bekannt. Die Sperrelemente sind zur Verhinderung eines axialen Auswanderns des Werkzeugs aus der Aufnahme zum Eingriff in korrespondierende Gegenelemente am Werkzeug ausgebildet und sind gleichwinklig in Umfangsrichtung beabstandet in der Aufnahme angeordnet. Weitere Werkzeughalter mit festen Aufnahmen sind zudem aus der EP 1029620, der JP S4895278, der EP 2001624 sowie der JP 1430001 bekannt.

Aufgabe der Erfindung ist es, ein Verfahren zur Herstellung einer Werkzeugaufnahme für einen Werkzeughalter zum reibschlüssigen Spannen von Werkzeugen zu schaffen, dass die Herstellung vereinfacht.

Diese Aufgabe wird durch ein Verfahren zur Herstellung einer Werkzeugaufhahme für einen Werkzeughalter zum reibschlüssigen Spannen von Werkzeugen mit den Merkmalen des Anspruchs 1 gelöst. Zweckmäßige Weiterbildungen und vorteilhafte Ausgestaltungen der Erfindung sind in den Unteransprüchen angegeben.

Zur direkten Anformung des Sperrelements an der Aufnahme wird die Aufnahme erfindungsgemäß aus Keramik- und/oder Metallpulver durch Press- oder Lasersintern hergestellt.

Dabei ist das mindestens eine Sperrelement einteilig mit der Aufnahme ausgebildet. Dadurch kann die Aufnahme zusammen mit den Sperrelementen einfach montiert werden. Außerdem geht durch das Sperrelement kein Platz für die Aufnahme verloren. Der gesamte, zur Verfügung stehende Platz kann durch die Aufnahme genutzt werden, so dass kein Spannkraftverlust entsteht.

Ein vorteilhaftes Spannsystem umfasst einen Werkzeughalter und ein Werkzeug, wobei der Werkzeughalter einen Grundkörper, eine verformbare Aufnahme zum Spannen eines Werkzeugs und mindestens ein mit der Aufnahme einteilig ausgeführtes Sperrelement enthält, das zur Verhinderung eines axialen Auswanderns des Werkzeugs aus dem Werkzeughalter in ein korrespondierendes Gegenelement am Werkzeug eingreift.

In einer besonders zweckmäßigen Ausführung ist die Aufnahme eine in einer Aufnahmeöffnung des Grundkörpers angeordnete und von außen mit Druckfluid beaufschlagbare Dehnbuchse, an deren Innenseite das mindestens eine Sperrelement angeordnet ist.

Die Aufnahme kann aber auch ein mit dem Grundköper einteilig ausgeführtes Schrumpffutter, ein Rollenkraftspannfutter, eine innerhalb eines Spannfutters angeordnete Reduzierhülse oder eine innerhalb einer Aufnahmeöffnung des Grundkörpers angeordnete und durch ein Spannelement verformbare Spannzange sein, an deren Innenseite das mindestens eine Sperrelement angeordnet ist, oder ein anderes reibschlüssig spannendes System.

In einer fertigungstechnisch zweckmäßigen und montagefreundlichen Ausführung kann das mindestens eine Sperrelement an der Aufnahme direkt angeformt sein.

Das Sperrelement kann zum vereinfachten Eingriff in das zugehörige Gegenelement einen halb- oder teilkreisförmigen Querschnitt aufweisen.

In einer vorteilhaften Weise kann sich das mindestens eine Sperrelement in Art eines Muttergewindegangs zumindest über einen Teilumfang der Aufnahme an deren Innenseite erstrecken. Eine über den Umfang gleichmäßigere Halterung kann dadurch erreicht werden, dass an der Innenseite der Aufnahme mehrere in Art eines Muttergewindegangs zumindest über einen Teilumfang der Aufnahme verlaufende Sperrelemente angeordnet sind. Bei mehreren Sperrelementen sind diese zweckmäßigerweise gleichwinklig in Umfangsrichtung beabstandet an der Aufnahme angeordnet.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Werkzeughalter mit einer Dehnhülse zum hydraulischen Spannen eines Werkzeugs in einem Längsschnitt;
- **Figur 2**: die Dehnhülse von Figur 1 in einer vergrößerten Schnittansicht;
- **Figur 3**: die Dehnhülse in einer Perspektive;
- **Figur 4**: eine Ansicht der Dehnhülse von hinten;
- **Figur 5**: eine Detailansicht der Dehnhülse in einem Teilschnitt;
- **Figur 6**: die Detailansicht A von Figur 2;
- **Figur 7**: ein erstes Ausführungsbeispiel eines Spannsystems mit Werkzeughalter, Dehnhülse und Werkzeug in einer Perspektive im Schnitt;
- **Figur 8**: ein zweites Ausführungsbeispiel eines Spannsystems mit Werkzeughalter und Werkzeug in einer Perspektive im Schnitt;
- **Figur 9**: ein drittes Ausführungsbeispiel eines Spannsystems mit Werkzeughalter, Reduzierhülse und Werkzeug in einer Perspektive im Schnitt;
- **Figur 10**: ein viertes Ausführungsbeispiel eines Spannsystems mit Werkzeughalter, Spannzange und Werkzeug in einer Perspektive im Schnitt und
- **Figur 11**: ein fünftes Ausführungsbeispiel eines Spannsystems mit einem Rollenkraftspannfutter und Werkzeug in einer Perspektive im Schnitt.

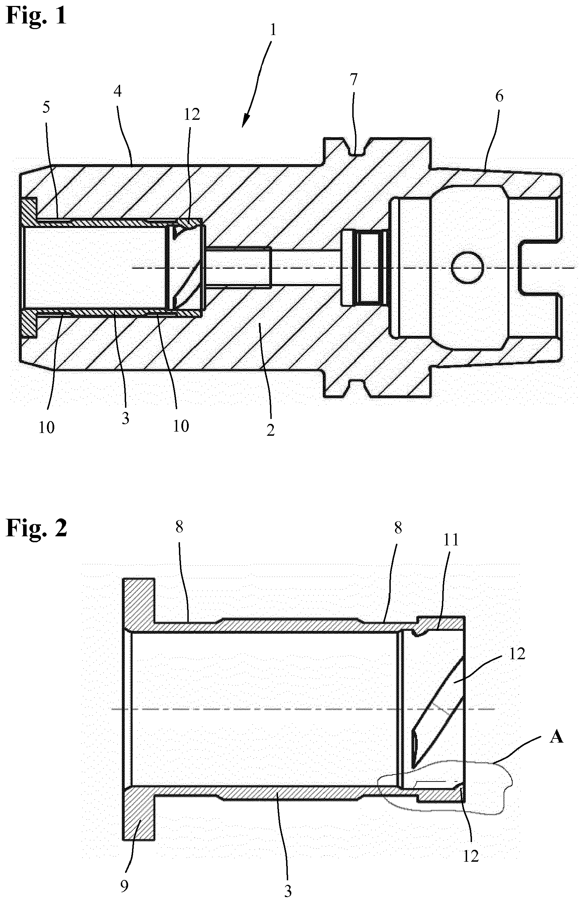

In Figur 1 ist eine hier als HSK-Werkzeugaufhahme dargestellte Werkzeugaufhahme 1 mit einem rotationssymmetrischen Grundkörper 2 und einer im Grundkörper 2 angeordneten Dehnbuchse 3 zur Aufnahme des Zylinderschafts eines hier nicht dargestellten Werkzeugs im Längsschnitt gezeigt. Der Grundkörper 2 weist einen zylindrischen vorderen Teil 4 mit einer Aufhahmeöffnung 5 für die Dehnbuchse 3 und einen konischen hinteren Teil 6 zur Aufnahme in einer Arbeitsspindel einer Werkzeugmaschine auf. Zwischen dem zylindrischen vorderen Teil 4 und dem konischen hinteren Teil 6 ist an der Außenseite des Grundkörpers 2 eine Greiferrille 7 vorgesehen.

Die in den Figuren 2 gesondert dargestellte Dehnbuchse 3 weist an ihrer Außenseite zwei voneinander beabstandete, umlaufende Vertiefungen 8 und einen Ringbund 9 am vorderen Ende auf. Zwischen den Vertiefungen 8 und der Innenwand des Grundkörpers 2 im Bereich der Aufnahmeöffnung 5 werden in Figur 1 dargestellte Druckkammern 10 zur Aufnahme eines Druckfluids begrenzt. Die Dehnbuchse 3 ist zweckmäßigerweise an ihrem vorderen und hinteren Ende fest mit dem Grundkörper 2 verbunden. Sie kann mit diesem verlötet oder auf andere Weise fest mit dem Grundkörper 2 verbunden sein. Die Druckkammern 10 sind z.B. über hier nicht dargestellte Kanäle innerhalb des Grundkörpers 2 mit einem ebenfalls im Grundkörper 2 angeordneten Druckraum verbunden, dessen Volumen durch einen z.B. mittels einer Schraube verstellbaren Kolben veränderbar ist. Durch Verstellung des Kolbens mit Hilfe der Schraube kann der Druck des im Druckraum und den Druckkammern 10 befindlichen Druckfluids erhöht und dadurch die Dehnbuchse 3 radial nach innen gedrückt werden. Durch diese an sich bekannte und daher nicht dargestellte Anordnung kann die Dehnbuchse 3 gleichmäßig an den in die Dehnbuchse 3 eingeführten Zylinderschaft eines zu spannenden Werkzeugs angepresst werden, wodurch ein zentrisches und vollflächiges Spannen mit hoher Spannkraft ermöglicht wird.

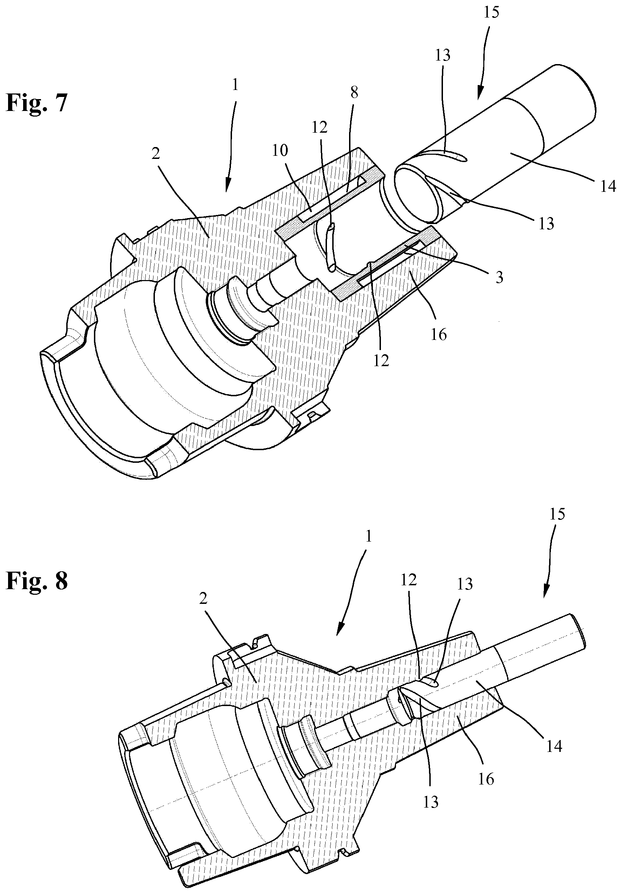

An der Innenseite der Dehnbuchse 3 sind in einem im Innendurchmesser erweiterten hinteren Bereich 11 nach innen vorstehende Sperrelemente 12 vorgesehen, die in Art eines Muttergewindegangs verlaufen und zum Eingriff in korrespondierende Gegenelemente 13 an einem in Figur 7 dargestellten Zylinderschaft 14 eines Werkzeugs 15 gelangen. Die Gegenelemente 13 sind in Art eines Bolzengewindegangs ausgeführt. Durch die in die entsprechenden Gegenelemente 13 am Werkzeug 15 eingreifenden Sperrelemente 12 wird eine Auszugssicherung geschaffen, die ein z.B. durch Schwingungen während der Bearbeitung bedingtes axiales Auswandern des Werkzeugs 15 verhindert.

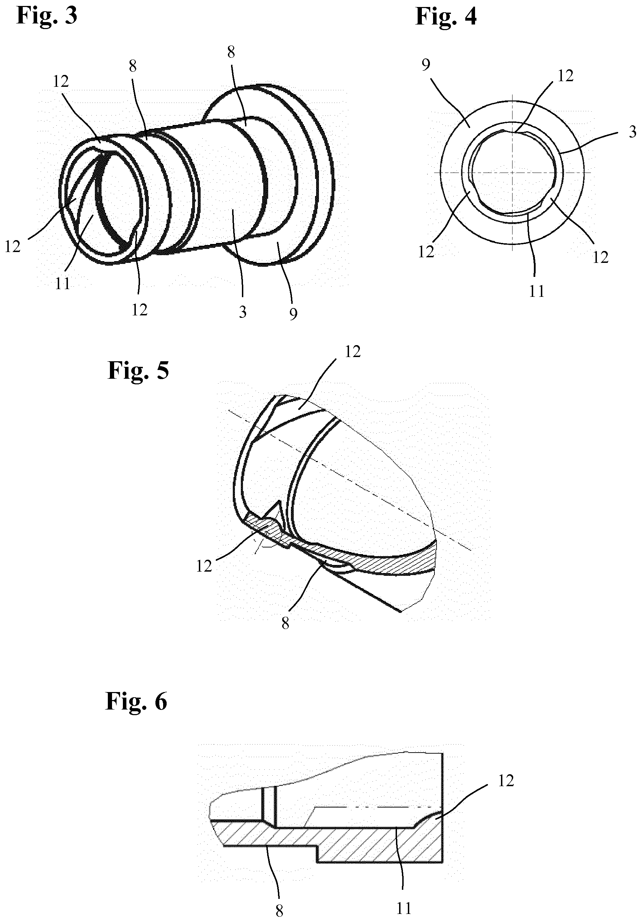

Beim gezeigten Ausführungsbeispiel sind die Sperrelemente 12 als in Umfangsrichtung wendelförmig verlaufende Vorsprünge mit halbkreisförmigem Querschnitt ausgeführt. Wie aus Figur 4 hervorgeht, sind bei dem Ausführungsbeispiel drei im Unfangsrichtung gleichwinklig beabstandete Vorsprünge in Form von Muttergewindegängen als Sperrelemente 12 vorgesehen, die in Art eines dreigängigen Innen-Muttergewindes mit jeweils demselben Steigungswinkel an der Innenwand der Dehnbuchse 3 verlaufen. Die zu den Sperrelementen 12 passenden Gegenelemente sind als Sperrnuten ausgebildet, die in Art eines dreigängigen Bolzengewindes an der Außenseite des Zylinderschafts 14 eines Werkzeugs 15 beginnend an der hinteren Stirnfläche entlang der Umfangsfläche wendelförmig verlaufen.

Die Dehnbuchse 3 wird zweckmäßig gemäß dem erfindungsgemäßen Verfahren hergestellt.

Zum Einspannen eines Werkzeugs in den Werkzeughalter 1, muss das Werkzeug beim Einsetzen in den Werkzeughalter 1 zunächst so gedreht werden, so dass die Sperrelemente 12 an der Dehnbuchse 3 in Eingriff mit den entsprechenden Gegenelementen 13 am Werkzeug 15 gelangen. Dann kann die Dehnbuchse 3 vom außen mit Druckfluid beaufschlagt werden. Durch den Druck wird die Dehnbuchse 3 nach innen gedrückt, wodurch das Werkzeug 15 gespannt wird. Über den formschlüssigen Eingriff der Sperrelemente 12 in die dazugehörigen Gegenelemente 13 kann ein axiales Auswandern des Werkzeugs 15 aus dem Werkzeughalter 1 verhindert werden.

In Figur 7 ist ein Spannsystem mit einem Werkzeughalter 1, einer Dehnbuchse 3 und einem z.B. als Fräser oder Bohrer ausgebildeten Werkzeug 15 gezeigt. Im Unterschied zur Ausführung der Figuren 1 bis 6 weist die Dehnbuchse 3 an ihrer Außenseite nur eine Vertiefung 8 zur Bildung einer Druckkammer 10 auf. Auch bei dieser Ausführung sind an der Innenseite der Dehnbuchse 3 nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 vorgesehen.

In Figur 8 ist ein weiteres Ausführungsbeispiel eines Spannsystems mit Werkzeughalter 1 und einem als Fräser, Bohrer oder dgl. ausgebildeten Werkzeug 15 gezeigt. Bei dieser Ausführung ist die Aufnahme als ein mit dem Grundkörper 2 einteilig ausgeführtes Schrumpffutter 16 ausgebildet. Bei einem solchen Werkzeughalter 1 wird das Schrumpffutter 16 z.B. durch induktive Erwärmung thermisch erhitzt, wodurch sich der Innendurchmesser des Schrumpffutters 16 vergrößert. Im erwärmten Zustand wird in das Schrumpffutter 16 ein Werkzeug 15 eingesetzt, wobei das Verhältnis des Innendurchmessers des Schrumpffutters 16 zum Außendurchmesser des Werkzeugschafts 14 derart ausgelegt ist, dass das Werkzeug 15 beim anschließenden Abkühlen des Schrumpffutters 16 fest in dem Schrumpffutter 16 gehalten wird. Bei dieser Ausführung sind an der Innenseite des Schrumpffutters 16 ebenfalls nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 vorgesehen.

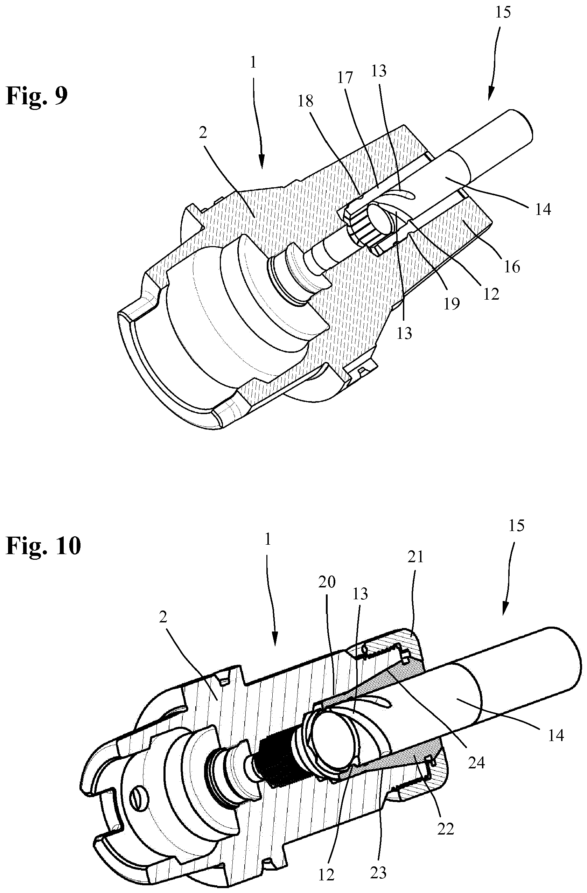

Bei einem in Figur 9 dargestellten weiteren Ausführungsbeispiel ist die Aufnahme ebenfalls als ein mit dem Grundkörper 2 einteilig ausgeführtes Schrumpffutter 16 ausgeführt. Hier wird das Werkzeug 15 innerhalb des Schrumpffutters 16 jedoch über eine Reduzierhülse 17 gespannt. Die Reduzierhülse 17 ist in an sich bekannter Weise als Schlitzhülse mit mehreren Axialschlitzen und einem an den Außendurchmesser des Werkzeugschafts 14 angepassten Innendurchmesser ausgebildet. Die Reduzierhülse 17 weist an ihrer Innenseite ebenfalls nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 auf. Die Reduzierhülse 17 enthält außerdem an ihrer Außenseite wendelförmig verlaufende Sperrnuten 18 zum Eingriff mit Sperrelementen 19, die in Form von nach innen vorstehenden, wendelförmig verlaufenden Vorsprüngen an der Innenseite des Schrumpffutters 16 angeformt sind. Dadurch wird auch eine Auszugssicherung zur Verhinderung eines axialen Auswanderns der Reduzierhülse 17 erreicht.

Figur 10 zeigt ein weiteres Ausführungsbeispiel, bei dem die Aufnahme als eine innerhalb einer Aufnahmeöffnung 20 des Grundkörpers 2 angeordnete und durch ein Spannelement 21 verformbare Spannzange 22 ausgebildet ist. Die Spannzange 22 weist eine äußere Konusfläche 23 zur Anlage an einer inneren Konusfläche 24 der Aufnahmeöffnung 20 auf. Die Konusflächen 23 und 24 sind so aufeinander abgestimmt, dass die Spannzange 22 durch Axialverschiebung nach innen zusammengedrückt werden kann und dadurch den Werkzeugschaft 14 eines Werkzeugs 15 klemmt. Die Spannzange 22 weist an ihrer Innenseite ebenfalls nach innen vorstehende Sperrelemente 12 in Form von wendelförmig verlaufenden Vorsprüngen zum Eingriff in als Sperrnuten ausgeführte Gegenelemente 13 an dem Werkzeugschaft 14 eines Werkzeugs 15 auf. Die Axialverschiebung der Spannzange 22 erfolgt durch das Spannelement 21, das hier als ein auf ein Außengewinde am vorderen Ende des Grundkörpers 2 aufgeschraubter Gewindering ausgeführt ist.

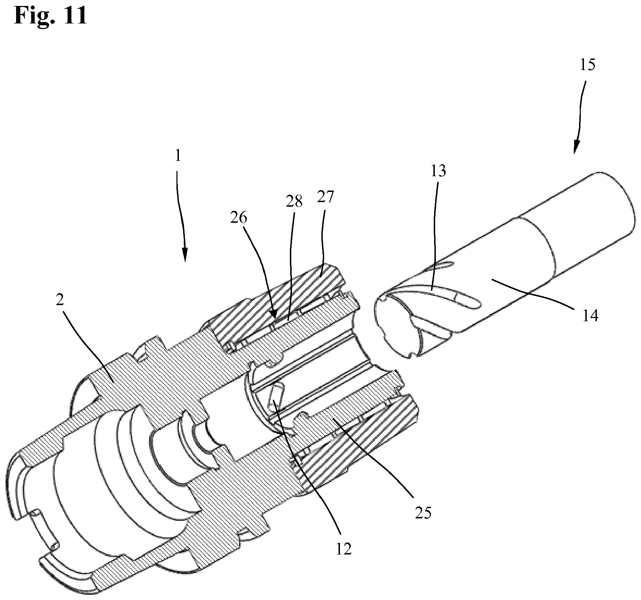

Der Werkzeughalter 1 kann in einer weiteren, in Figur 11 dargestellten Ausführung auch als so genanntes Rollenkraftspannfutter ausgebildet sein. Der Grundkörper 2 weist an einem vorderen Teil einen mit Längsschlitzen versehenen Spannbereich 25 als Aufnahme für den Werkzeugschaft 14 des Werkzeugs 15 auf. An dem verformbaren Spannbereich 25 ist eine üblicherweise mittels eines Nadellagers 26 oder eines anderen Wälzlagers drehbar gelagerte Spannmutter 27 angeordnet, durch deren Drehung ein Spanndruck auf den verformbaren Spannbereich 25 ausgeübt werden kann. Die innerhalb eines Lagerkäfigs gelagerten Nadelrollen 28 wälzen sich bei einer Drehung der Spannmutter 27 auf der sich verjüngenden Innenfläche der Spannmutter 27 und einer sich verjüngenden äußeren Oberfläche des verformbaren Spannbereichs 25 derart ab, dass sich beim Anziehen der Spannmutter 27 die Spannmutter 27 über die Nadelrollen 28 gegen den verformbaren Spannbereich 25 drückt, um den verformbaren Spannbereich 25 gegen den Schaft 14 des Werkzeugs 15 zu drücken. In der gezeigten Ausführungsform sind die nach innen vorstehenden Sperrelemente 12 ebenfalls als wendelförmig verlaufende Vorsprünge zum Eingriff in als Sperrnuten ausgeführte Gegenelemente 13 an dem Werkzeugschaft 14 des Werkzeugs 15 ausgebildet. Die Sperrelemente 12 sind dabei auf der Innenseite des verformbaren Spannbereichs 25 angeordnet. Es ist jedoch auch möglich, die Sperrelemente 12 weiter innerhalb des Grundkörpers 2 anzuordnen. Zudem könnte auch eine Reduzierhülse, wie in Figur 9 gezeigt, zwischen dem verformbaren Spannbereich 25 und dem Werkzeugschaft 14 angeordnet sein. Die Erfindung ist selbstverständlich nicht auf HSK-Werkzeugaufhahmen beschränkt. An dem Grundkörper 2 können in entsprechender Weise auch SK-, JIS-, BT-, ABS-, oder Capto-Schnittstellen und dgl. vorgesehen sein.

Die Sperrelemente müssen nicht zwingend im verformbaren Bereich der Aufnahme angeordnet sein. Sie können auch im nichtverformbaren Bereich oder im Bereich des Grundhalters liegen.

## Patentansprüche

1. Verfahren zur Herstellung einer verformbaren Aufnahme (3; 16; 17; 22; 25) zum Spannen eines Werkzeugs (15), welche in einen Grundkörper (2) eines Werkzeughalters (1) einsetzbar oder mit diesem einteilig ausgebildet ist, wobei die Aufnahme (3; 16; 17; 22; 25) mindestens ein Sperrelement (12) aufweist, das zur Verhinderung eines axialen Auswandern des Werkzeugs (15) aus der Aufnahme (3; 16; 17; 22; 25) zum Eingriff in ein korrespondierendes Gegenelement (13) am Werkzeug (15) ausgebildet ist, wobei das mindestens eine Sperrelement (12) einteilig mit der Aufnahme (3; 16; 17; 22; 25) ausgebildet ist, und wobei das mindestens eine Sperrelement (12) als nach innen ragender Vorsprung ausgebildet ist, **dadurch gekennzeichnet, dass** die Aufnahme (3; 16; 17; 22; 25) aus Keramik- und/oder Metallpulver durch Presssintern oder Lasersintern hergestellt wird.

2. Verfahren nach Anspruch 1, **dadurch gekennzeichnet, dass** die Aufnahme eine in einer Aufnahmeöffnung (5) des Grundkörpers (2) angeordnete und von außen mit Druckfluid beaufschlagbare Dehnbuchse (3) ist, an deren Innenseite das mindestens eine Sperrelement (12) angeordnet ist.

3. Verfahren nach Anspruch 1, **dadurch gekennzeichnet, dass** die Aufnahme als ein mit dem Grundköper (2) einteilig ausgeführtes Schrumpffutter (16) ausgebildet ist, an dessen Innenseite das mindestens eine Sperrelement (12) angeordnet ist.

4. Verfahren nach Anspruch 1, **dadurch gekennzeichnet, dass** die Aufnahme als eine innerhalb eines Schrumpffutters (16) angeordnete Reduzierhülse (17) ausgebildet ist, an deren Innenseite das mindestens eine Sperrelement (12) angeordnet ist.

5. Verfahren nach Anspruch 1, **dadurch gekennzeichnet, dass** die Aufnahme als eine innerhalb einer Aufnahmeöffnung (20) des Grundkörpers (2) angeordnete und durch ein Spannelement (21) verformbare Spannzange (22) ausgebildet ist, an deren Innenseite das mindestens eine Sperrelement (12) angeordnet ist.

6. Verfahren nach Anspruch 1, **dadurch gekennzeichnet, dass** die Aufnahme als an einem vorderen Teil des Grundkörpers (2) angeordneter Spannbereich (25) ausgebildet ist, der durch eine mittels eines Wälzlagers (28) drehbar auf dem Grundkörper (2) gelagerte Spannmutter (27) verformbar ist.

7. Verfahren nach einem der Ansprüche 1 bis 6, **dadurch gekennzeichnet, dass** das Sperrelement einen halb- oder teilkreisförmigen Querschnitt aufweist.

8. Verfahren nach einem der Ansprüche 1 bis 7, **dadurch gekennzeichnet, dass** sich das mindestens eine Sperrelement (12) in Art eines Muttergewindegangs zumindest über einen Teilumfang der Aufnahme (3; 16; 17; 22; 25) an deren Innenseite erstreckt.

9. Verfahren nach einem der Ansprüche 1 bis 8, **dadurch gekennzeichnet, dass** an der Innenseite der Aufnahme (3; 16; 17; 22; 25) mehrere in Art eines Muttergewindegangs zumindest über einen Teilumfang der Dehnbuchse (3) verlaufende Sperrelemente (12) angeordnet sind.

10. Verfahren nach Anspruch 9, **dadurch gekennzeichnet, dass** die mehreren Sperrelemente (12) an der Aufnahme (3; 16; 17; 22; 25) in deren Umfangsrichtung gleichwinklig beabstandet angeordnet sind.

## Claims

1. Method for production of a deformable receiving portion (3; 16; 17; 22; 25) for clamping a tool (15), which is insertable into or is formed integrally with a main body (2) of a tool holder (1), wherein the receiving portion (3; 16; 17; 22; 25) comprises at least one blocking element (12) that is formed to prevent axial slippage of the tool (15) from the receiving portion (3; 16; 17; 22; 25) by engaging with a corresponding counter element (13) on the tool (15), wherein the at least one blocking element (12) is formed integrally with the receiving portion (3; 16; 17; 22; 25), and wherein the at least one blocking element (12) is formed as an inward-extending projection, **characterised in that** the receiving portion (3; 16; 17; 22; 25) is produced from ceramic and/or metal powder through pressure sintering or laser sintering.

2. Method according to claim 1, **characterised in that** the receiving portion is an expansion sleeve (3) deployed in a receiving opening (5) of the main body (2) and subject to external pressure with hydraulic fluid, on the inner side of which is deployed the at least one blocking element (12).

3. Method according to claim 1, **characterised in that** the receiving portion is formed as a shrink-fit chuck (16) connected integrally with the main body (2), on the inner side of which is deployed the at least one blocking element (12).

4. Method according to claim 1, **characterised in that** the receiving portion is formed as a reducing sleeve (17) deployed within the shrink-fit chuck (16), on the inner side of which is deployed the at least one blocking element (12).

5. Method according to claim 1, **characterised in that** the receiving portion is formed as a collet chuck (22) that is arranged within a receiving opening (20) of the main body (2) and deformable by a clamping element (21), on the inner side of which is arranged the at least one blocking element (12).

6. Method according to claim 1, **characterised in that** the receiving portion is formed as a clamping region (25) deployed on a front part of the main body (2), that is deformable by a clamping nut (27) seated on the main body (2) in such a way that it is rotatable by means of a roller bearing (28).

7. Method according to one of claims 1 to 6, **characterised in that** the blocking element has a semicircular or partially circular cross-section.

8. Method according to one of claims 1 to 7, **characterised in that** the at least one blocking element (12) extends at least over a partial circumference of the receiving portion (3; 16; 17; 22; 25) on the inner side thereof, in the manner of a female thread.

9. Method according to one of claims 1 to 8, **characterised in that** multiple blocking elements (12) running at least over a partial circumference of the expansion sleeve (3) are arranged on the inner side of the receiving portion (3; 16; 17; 22; 25), in the manner of a female thread.

10. Method according to claim 9, **characterised in that** the multiple blocking elements (12) are arranged set apart from one another at equal angles in the receiving portion (3; 16; 17; 22; 25) in their peripheral direction.

## Revendications

1. Procédé servant à fabriquer un logement (3 ; 16 ; 17 ; 22 ; 25) déformable servant à serrer un outil (15), lequel peut être inséré dans un corps de base (2) d'un porte-outil (1) ou est réalisé d'un seul tenant avec celui-ci, dans lequel le logement (3 ; 16 ; 17 ; 22 ; 25) présente au moins un élément de blocage (12), qui est réalisé pour venir en prise avec un contre-élément (13) correspondant au niveau de l'outil (15) pour empêcher une sortie axiale de l'outil (15) hors du logement (3 ; 16 ; 17 ; 22 ; 25), dans lequel l'au moins un élément de blocage (12) est réalisé d'un seul tenant avec le logement (3 ; 16 ; 17 ; 22 ; 25) et dans lequel l'au moins un élément de blocage (12) est réalisé en tant que partie faisant saillie dépassant vers l'intérieur, **caractérisé en ce que** le logement (3 ; 16 ; 17 ; 22 ; 25) est fabriqué à partir d'une poudre de céramique et/ou de métal par frittage par compression ou par frittage au laser.

2. Procédé selon la revendication 1, **caractérisé en ce que** le logement est une douille d'expansion (3) disposée dans une ouverture de logement (5) du corps de base (2) et pouvant être soumise depuis l'extérieur à l'action d'un fluide sous pression, au niveau du côté intérieur de laquelle l'au moins un élément de blocage (12) est disposé.

3. Procédé selon la revendication 1, **caractérisé en ce que** le logement est réalisé en tant que mandrin rétractable (16) réalisé d'un seul tenant avec le corps de base (2), au niveau du côté intérieur duquel l'au moins un élément de blocage (12) est disposé.

4. Procédé selon la revendication 1, **caractérisé en ce que** le logement est réalisé en tant que douille de réduction (17) disposée à l'intérieur d'un mandrin rétractable (16), au niveau du côté intérieur de laquelle l'au moins un élément de blocage (12) est disposé.

5. Procédé selon la revendication 1, **caractérisé en ce que** le logement est réalisé en tant que pince de serrage (22) disposée à l'intérieur d'une ouverture de logement (20) du corps de base (2) et pouvant être déformée par un élément de serrage (21), au niveau du côté intérieur de laquelle l'au moins un élément de blocage (12) est disposé.

6. Procédé selon la revendication 1, **caractérisé en ce que** le logement est réalisé en tant que zone de serrage (25) disposée au niveau d'une partie avant du corps de base (2), qui peut être déformée par un écrou de serrage (27) monté sur le corps de base (2) de manière à pouvoir tourner au moyen d'un palier à roulement (28).

7. Procédé selon l'une quelconque des revendications 1 à 6, **caractérisé en ce que** l'élément de blocage présente une section transversale en forme de demi-cercle ou de cercle partiel.

8. Procédé selon l'une quelconque des revendications 1 à 7, **caractérisé en ce que** l'au moins un élément de blocage (12) s'étend à la manière d'un pas de filetage d'écrou au moins sur une périphérie partielle du logement (3 ; 16 ; 17 ; 22 ; 25) au niveau de son côté intérieur.

9. Procédé selon l'une quelconque des revendications 1 à 8, **caractérisé en ce que** plusieurs éléments de blocage (12) s'étendant à la manière d'un pas de filetage d'écrou au moins sur une périphérie partielle de la douille d'expansion (3) sont disposés au niveau du côté intérieur du logement (3 ; 16 ; 17 ; 22 ; 25) .

10. Procédé selon la revendication 9, **caractérisé en ce que** les plusieurs éléments de blocage (12) sont disposés à distance selon un angle identique au niveau du logement (3 ; 16 ; 17 ; 22 ; 25) dans sa direction périphérique.
